# EUROPEAN PATENT APPLICATION

(11) **EP 3 024 280 A2**
(43) Date of publication of application: **25.05.2016**
(21) Application number: 15194644.9
(22) Date of filing: 16.11.2015
(51) Int. Cl.: H04W 48/14, H04W 12/06

(54) **METHOD OF ACCESS POINT CONNECTION**

(30) Priority: 21.11.2014 US 201462082618 P; 02.11.2015 US 201514929418
(71) Applicant: MediaTek, Inc, Hsin-Chu 300 (TW)
(72) Inventor: WEN, Yuan-Chin, 100 Taipei City (TW); TSAI, Yu-Che, Hsinchu City 300 (TW); HSU, Tsai-Yuan, Hsinchu County 30272 (TW); HUANG, Shun-Yong, Hsinchu County 302 (TW)
(74) Representative: Hoefer & Partner Patentanwälte mbB

(57) **Abstract**

A method for a communication device in a wireless communication system is disclosed. The method comprises detecting a signal from an access point in the wireless communication system, wherein the signal indicates that the access point is passpoint enabled, transmitting a request message with credential information to the access point, and receiving a response message with an access point information, from the access point.

## Description

### Field of the Invention

The present invention relates to a method used in a communication device in a wireless communication system, and more particularly, to a method of access point connection.

### Background of the Invention

Network discovery and selection is one of the most significant and fundamental functions of any Wi-Fi network by which user equipments (UEs) discover access points (APs) and determine their capabilities. UEs can use active (probes) or passive (beacons) scanning techniques to discover APs, determine which network is the best, and make a connection.

Wi-Fi certified passpoint is launched as an industry-wide solution to streamline network access and eliminate the need for users to find and authenticate a network each time they connect. In Wi-Fi networks that do not support passpoint, users must search for and choose an AP, request the connection to the AP each time, and in many cases, must re-enter their authentication credentials. In other words, passpoint automates that entire process, enabling a seamless connection between Wi-Fi networks and UEs, all while delivering the highest Wi-Fi protected access 2 (WPA2) security. That is, passpoint is enabling a more cellular-like experience when connecting to Wi-Fi networks.

Currently, a UE needs to find passpoint AP which is able to authenticate the UE with back-end radius server. Then the UE will get connection according to access network query protocol (ANQP) result. The ANQP is a query and response protocol used by the UE to obtain assistance information for connection.

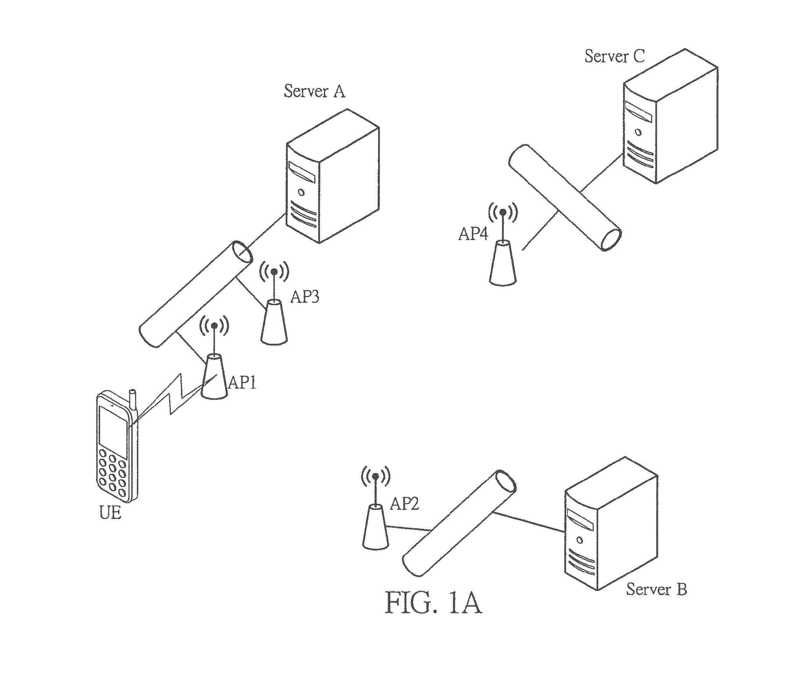

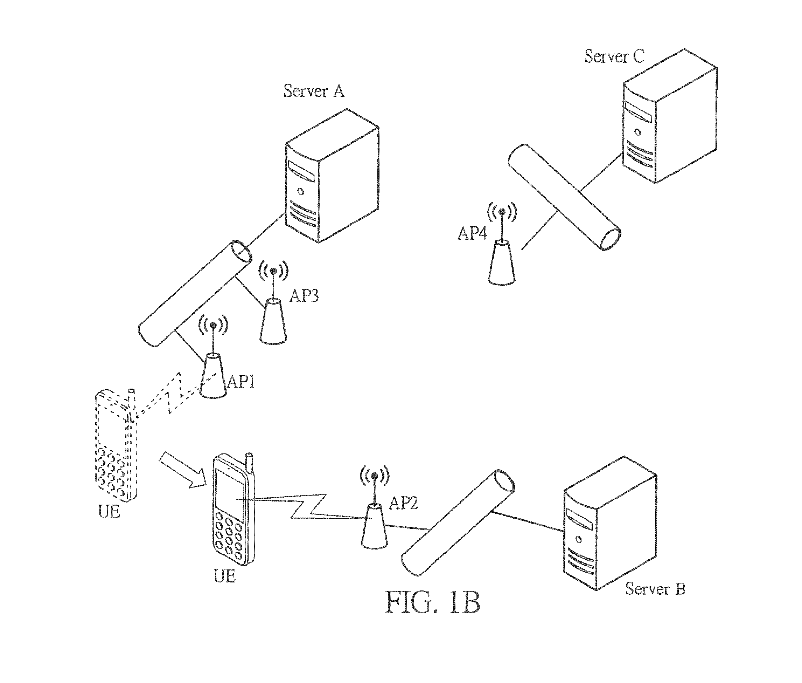

However, a problem on the current design of the AP connection process may rise. Please refer to FIGs. 1A-1D, which are schematic diagrams of an AP connection according to the prior art. In FIG. 1A, the UE contains SIM credential information with {MCCα, MNCα} (namely public land mobile network (PLMN) identity). When the UE scans, it finds the AP1 which is passpoint enabled, and then starts to query the AP1 for 3rd Generation Partnership Project (3GPP) information via the ANQP. The AP1 replies {MCCβ, MNCβ} to the UE, wherein the MCCα ≠ MCCβ and MNCα ≠ MNCβ. Then the UE knows that AP1 does not provide service to the UE, and will not try to associate with the AP1. As shown in FIG. 1B, the UE then moves to another location. The UE finds the AP2 which is passpoint enabled, and queries the AP2 of 3GPP information via the ANQP. However, the AP2 returns it does not contain 3GPP information. Then the UE will not try to associate with the AP2.

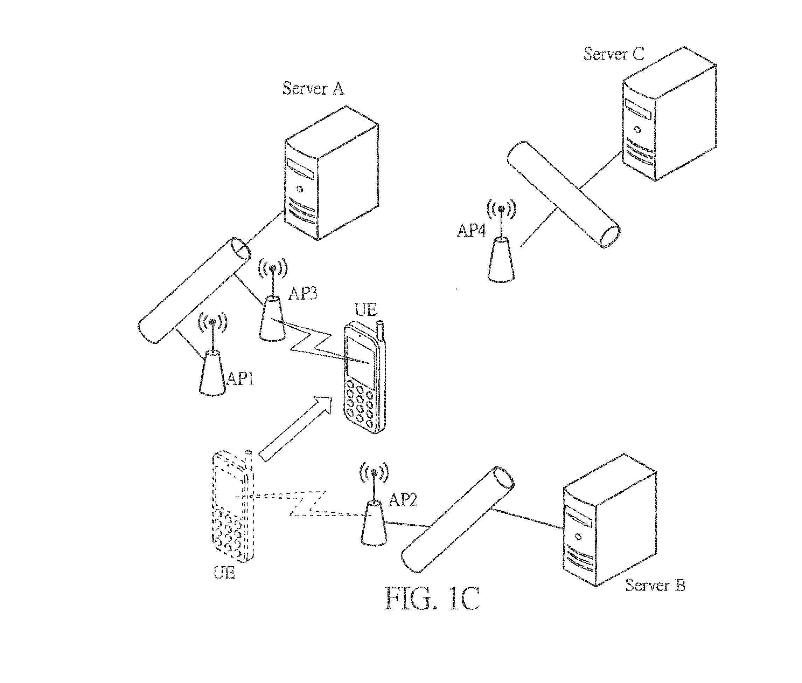

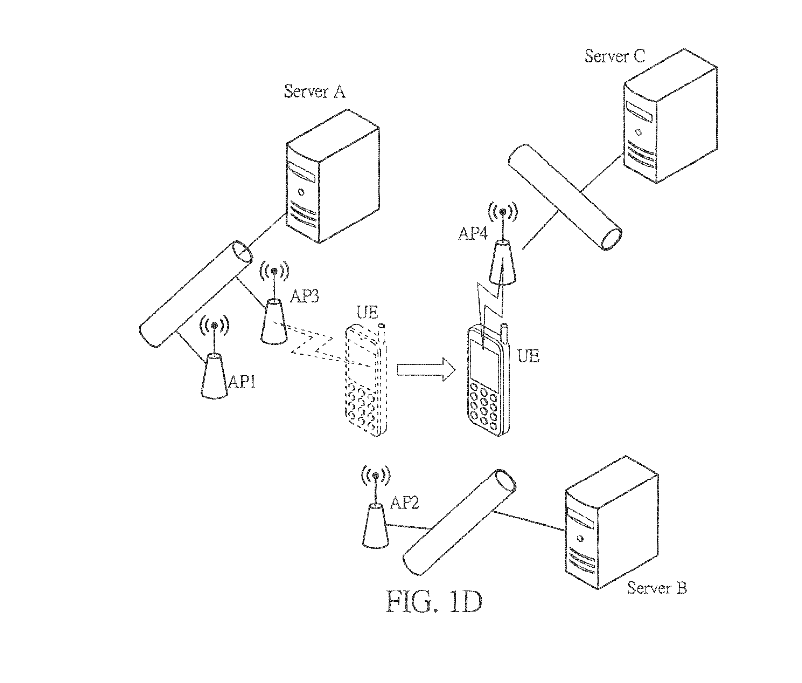

Continuously, in FIG. 1C, The UE keeps moving to another place. It finds the AP3 which is passpoint disabled. Then the UE will not try to associate with the AP3. Finally, as shown in FIG. 1D, the UE finds the AP4 which is passpoint enabled. The UE queries the AP4 for 3GPP information via the ANQP. The AP4 replies the {MCCα, MNCα}, namely the MNC and MCC value are identical to the UE. Then, the UE creates a profile associated with the AP4, and tries to establish a connection with the AP4.

The drawback of the current design includes time consuming for the user to search for passpoint AP which is able to authenticate the user with back-end radius server. The worst case, if there is no back-end radius server can authenticate the user, the user cannot get connection when the user tries the last AP of this area, which exhausts power to query useless information.

### Summary of the Invention

The application aims at providing a method of access point connection in order to solve the abovementioned problem.

This is achieved by a method of access point connection according to claims 1, 9 and 17. The dependent claims pertain to corresponding further developments and improvements.

As will be seen more clearly from the detailed description following below, the claimed method for a communication device in a wireless communication system comprises detecting a signal from an access point in the wireless communication system, wherein the signal indicates that the access point is passpoint enabled, transmitting a request message with credential information to the access point, and receiving a response message with an access point information from the access point.

### Brief Description of the Drawings

FIGs. 1A-1D are schematic diagrams of an access point connection according to the prior art.
FIG. 2 is a schematic diagram of an exemplary communication device.
FIG. 3 is a flowchart of an exemplary process according to the present disclosure.
FIG. 4 is a schematic diagram of a message flow of access point connection according to the present disclosure.

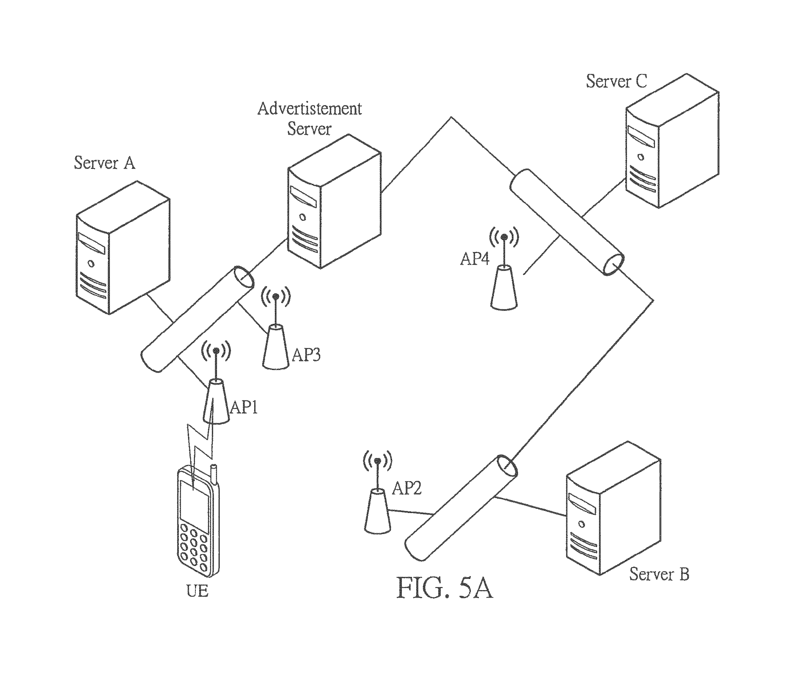

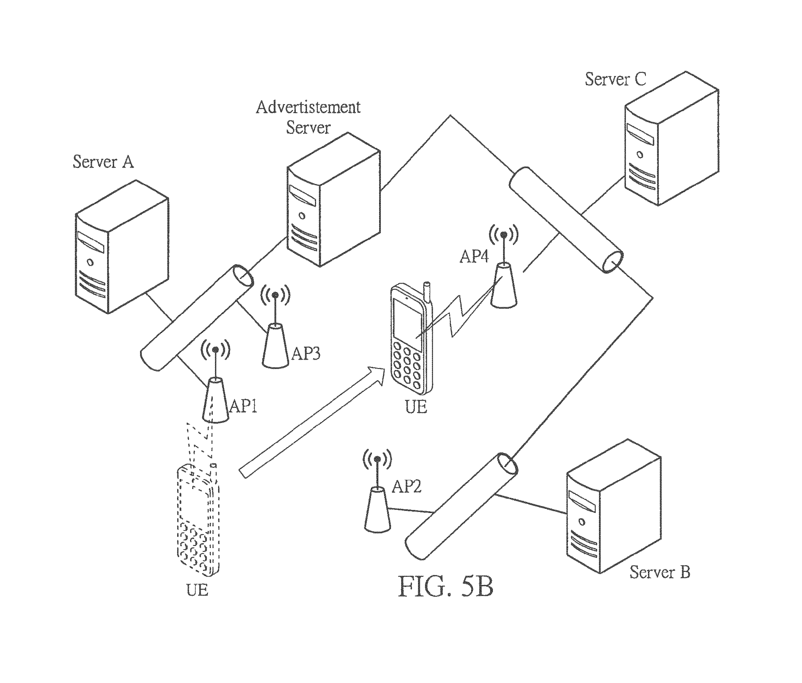

FIGs. 5A-5B are schematic diagrams of an access point connection according to the present disclosure.

### Detailed Description

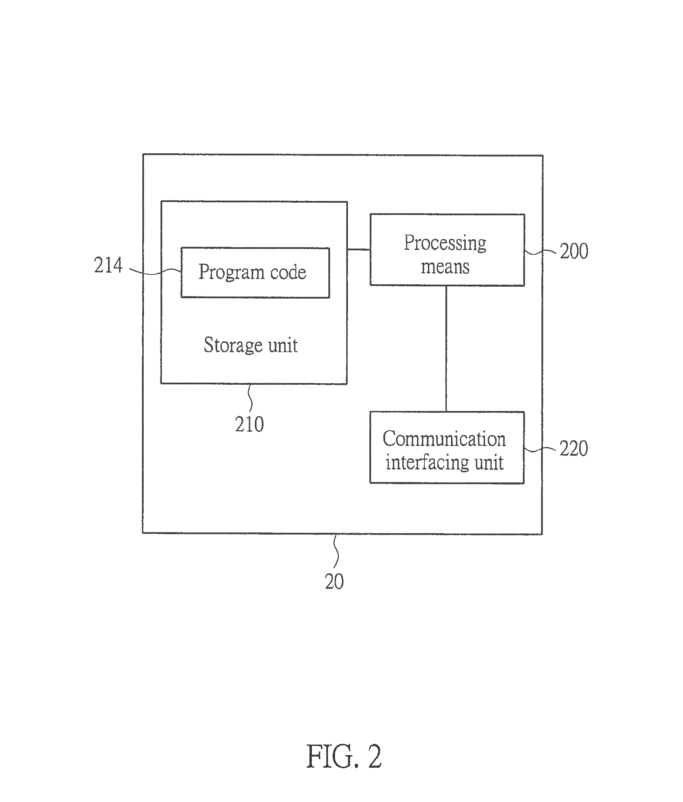

FIG. 2 illustrates a schematic diagram of an exemplary communication device 20. The communication device 20 can be a user equipment (UE) or a network node (i.e. access point, hereafter called AP). The UEs can be devices such as mobile phones, computer systems, machine type devices, etc. Besides, the network node and the UE can be seen as a transmitter or receiver according to transmission direction, e.g., for uplink (UL), the UE is the transmitter and the network node is the receiver, and for downlink (DL), the network node is the transmitter and the UE is the receiver. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with a network node according to processing results of the processing means 200.

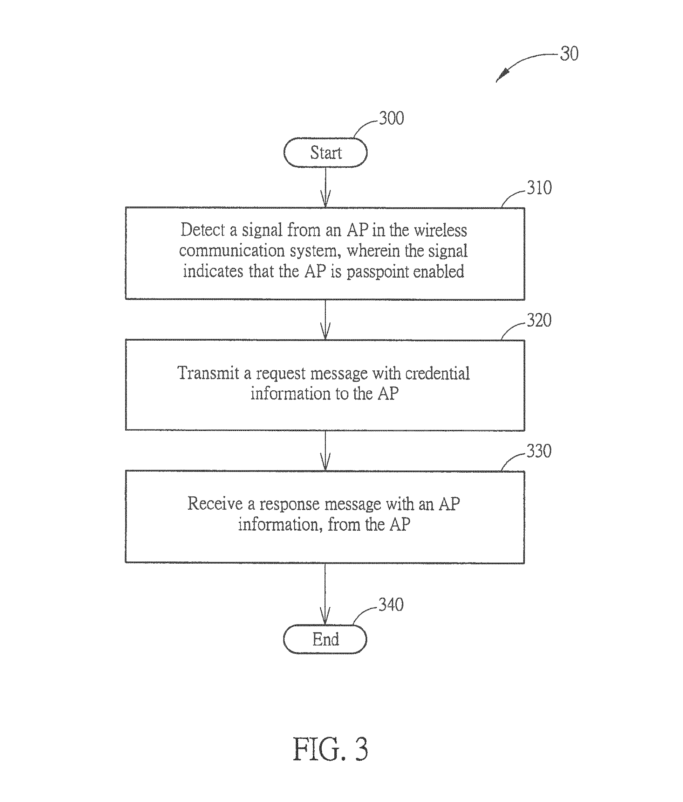

Please refer to FIG. 3, which is a flowchart of a process 30 according to an example of the present disclosure. The process 30 is utilized in the UE for AP connection. The process 30 may be compiled into a program code 214 to be stored in the storage unit 210, and may include the following steps:
- Step 300:: Start.
- Step 310:: Detect a signal from an AP in the wireless communication system, wherein the signal indicates that the AP is passpoint enabled.
- Step 320:: Transmit a request message with credential information to the AP.
- Step 330:: Receive a response message with an AP information, from the AP.
- Step 340:: End.

According to the process 30, the UE includes it's credential information in a request message of the ANQP, to the passpoint enabled AP. On the other hand, the passpoint enabled AP replies the AP information, which may include an AP list including APs capable to authenticate the UE and corresponding locations, to the UE. In a word, the UE uses pre-advertised information (i.e. credential information) to query which AP is able to authenticate the UE and where the AP is.

Note that, the passpoint enabled AP, which receives UE's credential information, forwards the UE's credential information to a back-end advertisement server, so that the server can decide the APs which is able to authenticate the UE and then transmit the AP list to the passpoint enabled AP.

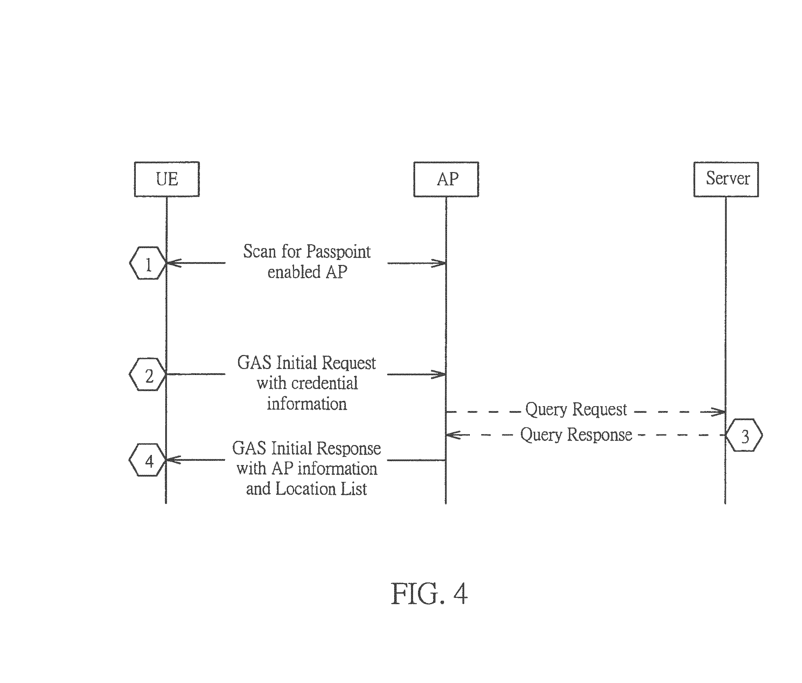

In detail, please refer to Fig. 4, which illustrate a message flow of AP connection via the ANQP. In step 1, the UE scans passpoint enabled AP with active (probes) or passive (beacons). According to the scan result, the UE knows if there is any passpoint enabled AP. In step 2, The UE pre-advertise it's credential information (i.e. public land mobile network (PLMN) or realm) to the passpoint enabled AP with "GAS Initial Request" message. In step 3, the passpoint enabled AP forwards the UE's query, "Query Request" message, to the server. The server analyzes the query and replies "Query Response" message to the passpoint enabled AP. Note that, the "Query Response" message contains an AP list including APs capable of authenticating the UE and corresponding geo-spatial location of the APs. In step 4, the UE retrieves the AP locations by "GAS Initial Response" from the passpoint enabled AP, and applies location service to find the nearest AP. However, if there is no authenticator within this area can authenticate the UE's credential, then the passpoint enabled AP replies a reason code claimed no authenticator or reply the "GAS Initial Response" with no AP list.

Take an example based on process 30. Please refer to 5A-5B, which illustrates the AP connection process according to the present disclosure. In the beginning, the UE contains SIM credential information with {MCCα, MNCα}. When the UE scans, it finds AP1 which is passpoint enabled, it starts to query AP1 for 3GPP information and pre-advertised it's credential information via the ANQP. The AP1 forwards the queries to the advertisement server. Then the server replies that the AP4 can authenticate the UE and the location of the AP4 to the UE via the AP1. After being notified, the UE creates the profile associated with the AP4 and moves to the location of the AP4. The UE does not need to initiate ANQP sequence again because it already knows the AP4 can authenticate the credential of the UE. If there is no authenticator within this area, the AP1 will reply a reason code claimed no authenticator. Thus, the UE will leave and does not create profile.

As can be seen, by including credential information in a signaling/message of the ANQP, the server determines which AP can authenticate the credential of the UE and notifies the UE of APs capable of authentication and corresponding location (namely AP list). With such manner, the UE obtained the AP list can associate with an AP capable of authentication according to the AP list, so as to reduce the time consuming and power waste in AP search and ANQP sequence.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, the present invention addresses to access point connection in Wi-Fi system. The UE allocates it's credential information (i.e. PLMN/realm) in a signaling/message of ANQP to the passpoint enable AP, to obtain the AP list from the server. As a result, AP connection can be accelerated with the AP list, and time consuming and power waste in AP search and ANQP sequence are reduced.

## Claims

1. A method for a communication device in a wireless communication system, **characterized by** the method comprising:
detecting a signal from an access point in the wireless communication system, wherein the signal indicates that the access point is passpoint enabled (310);
transmitting a request message with credential information to the access point (320); and
receiving a response message with access point information from the access point (330).

2. The method of claim 1, **characterized in that** the response message comprises an access point list including access points and locations corresponding to the access points, and further comprising:
applying a location service to find the nearest access point according to the access point list
creating a profile associated with the found access point of the access point list; and
moving to the location of the found access point according to the access point list.

3. The method of claim 1, **characterized in that** the credential information includes public land mobile network (PLMN) and realm.

4. The method of claim 1, **characterized in that** the request message is defined by Access Network Query Protocol (ANQP) for querying 3GPP information of an ANQP serve, which is used for determining the access point list in which access points are able to authenticate the mobile device, and the response message is defined by ANQP for responding 3GPP information of the ANQP server.

5. The method of claim 1, **characterized in that** the response message comprises a reason code claimed no access point capable of authentication.

6. The method of claim 5, **characterized in that** the request message is defined by Access Network Query Protocol (ANQP) for querying 3GPP information of an ANQP server, which is used for determining at least an access point capable of authentication for the mobile device.

7. A method for an access point in a wireless communication system, **characterized by** the method comprising:
receiving a request message with credential information from a mobile device in the wireless communication system;
forwarding the request message to a server;
receiving a response with access point information, from the server; and
transmitting the response message to the mobile device.

8. The method of claim 7, **characterized in that** the credential information includes PLMN and realm.

9. The method of claim 7, **characterized in that** the access point information comprises access points and locations corresponding to the access points.

10. The method of claim 9, **characterized in that** the request message is defined by Access Network Query Protocol (ANQP) for querying 3GPP information of the server, which is used for determining the access point list in which access points are able to authenticate the mobile device, and the response message is defined by ANQP for responding of 3GPP information of the server.

11. The method of claim 7, **characterized in that** the server is used for determining an access point list in which access points are able to authenticate the mobile device.

12. The method of claim 11, **characterized in that** the response indicates no access point list, and the step of transmitting the response message comprises:
replying a reason code claimed no access point capable of authentication, to the mobile device.

13. The method of claim 11, **characterized in that** the request message is defined by Access Network Query Protocol (ANQP) for querying 3GPP information of the server, and the response message is defined by ANQP for responding of 3GPP information of the server.

14. A method for a server, **characterized by** the method comprising:
receiving a request message with credential information of a mobile device of a wireless communication system, from an access point in the wireless communication system;
determining an access point information; and
transmitting a response message with the access point information to the access point.

15. The method of claim 14, **characterized in that** the credential information includes public land mobile network (PLMN) and realm.

16. The method of claim 14, **characterized in that** the access point information comprises an access point list of access points that are able to authenticate the mobile device according to the credential information.
